# EUROPEAN PATENT APPLICATION

(11) **EP 4 715 623 A1**
(43) Date of publication of application: **25.03.2026**
(21) Application number: 25204175.1
(22) Date of filing: 23.09.2025
(51) Int. Cl.: G06F 16/242

(54) **OBTAINING SEARCH PAGE RESULTS USING LANGUAGE MODELS**

(30) Priority: 24.09.2024 US 202463698236 P; 25.03.2025 US 202563777369 P
(71) Applicant: Spotify AB, 111 53 Stockholm (SE)
(72) Inventor: PALUMBO, Enrico, 111 53 Stockholm (SE); PENHA, Gustavo, 111 53 STOCKHOLM (SE); BOUCHARD, Hugues, 111 53 STOCKHOLM (SE)
(74) Representative: Kransell & Wennborg KB

(57) **Abstract**

Example implementations include methods and systems that relate to providing search results in a media content delivery system. An example method includes receiving a search query input via a user interface and generating, by use of a Language Model (LM), a text-based intermediate summary based on the search query input and information about one or more backend services associated with the media content delivery system. The text-based intermediate summary is indicative of a user's search intent. The method also includes generating, by use of the LM, structured instructions based at least on the text-based intermediate summary and the information about the one or more backend services. The structured instructions are processable by one or more of the backend services. The method additionally includes executing the structured instructions by way of one or more of the backend services so as to generate search results.

## Description

### FIELD OF THE INVENTION

The present disclosure relates to the field of media content delivery systems. Specifically, it pertains to methods, systems, and devices for delivering more relevant content recommendations based on a user search query.

### BACKGROUND

The growth in digital content available across various platforms has made it increasingly challenging for users to discover relevant media that aligns with their interests and preferences. This content may span a variety of formats, including video, audio, text, and interactive media, distributed across diverse media content delivery systems such as streaming services, social media platforms, and digital libraries. The sheer volume of content, coupled with the diversity of user preferences, necessitates advanced tools and methodologies to assist users in navigating and selecting from the vast array of available digital media.

Conventional media content delivery systems have relied on relatively simple recommendation methods, such as manually curated lists or basic algorithms that consider user-specific factors, such as past consumption history or demographic data. While these traditional methods provide some degree of personalized recommendations, they often fall short in delivering truly relevant and engaging content. Users may encounter irrelevant or repetitive suggestions, leading to user frustration and suboptimal engagement with the media delivery platform.

Recent advancements in artificial intelligence (AI) and machine learning (ML) technologies have opened new possibilities for improving the accuracy and relevance of content recommendations. AI-based recommendation systems can analyze large volumes of data, including user behavior, content attributes, and contextual factors, to generate highly personalized recommendations. These systems employ sophisticated algorithms, such as collaborative filtering, content-based filtering, and deep learning models, to predict user preferences with a higher degree of accuracy compared to traditional methods.

Despite the promise of AI-driven recommendation systems, several challenges remain. One significant challenge is the ability to process and analyze the vast and heterogeneous data sets in real-time to generate timely and relevant recommendations. Another challenge is ensuring that the recommendations are based on a given user's intent and not simply on individual keywords or past content consumption history. Moreover, there is a growing need to enhance the explainability of AI-based recommendations, enabling users to understand why certain content is recommended to them, which may beneficially build trust and improve user satisfaction.

Accordingly, there exists a need to provide more relevant digital content recommendations based on user search queries.

### SUMMARY

Various implementations disclosed herein provide improved digital content recommendations by using a language model (LM) using chain-of-thought and/or few shot prompting to better discern user intent. The described methods and systems orchestrate and generate rich and structured search results pages based on users' entertainment needs. These methods and systems advance the user content search process from a conventional content ranking system to an agent that gauges an individual user's intent to provide more relevant and visually-engaging recommendations.

In particular, the present disclosure includes receiving a search query input via a user interface and generating structured instructions based on information about one or more backend services associated with a media content delivery system to more specifically provide search results by way of a customized search engine results page (SERP). In some examples, the SERP can be displayed such that relevant content and content types are provided via a user interface according to a displayable search engine results page layout. Optionally, in some embodiments, prior to generating the structured instructions, a text-based intermediate summary may be generated based on the search query input and information about the one or more backend services. The text-based intermediate summary is meant to be indicative of a user's search intent.

Example embodiments interpret the user search query to better understand the user's intent and to provide an optimal search experience. The various described systems and methods receive the user search query and essentially attempt to answer "questions" such as: 1) is the user interested in discovering new content, or in navigating toward familiar content? 2) Is the user looking for a podcast or a music video? 3) Is the user trying to engage in a streaming session or curating a selection of songs for a playlist? Based on the determined user intent, the SERP can be adjusted (e.g., displayed via a user interface) in various ways so as to provide more relevant and engaging recommendations.

By utilizing the disclosed LM-based method, systems, and devices, digital content recommendations from a media content delivery system can be beneficially improved for users. The described systems and methods discern user intent and match that intent to available backend (e.g., server-side) services and resources to ensure that the recommendations remain relevant and engaging. Furthermore, by discerning the user's intent, the methods and systems enhance the transparency and explainability of its recommendations, providing users with insights into the rationale behind the suggested content. This approach aims to significantly improve user satisfaction and engagement with media content delivery platforms by delivering more accurate, diverse, and comprehensible content recommendations.

The disclosed methods and systems provide a number of technical advantages. For instance, by providing more relevant and useful content recommendations to users, fewer search iterations, and therefore fewer computing resources, need to be utilized. Also, by discerning the user's intent in context along with information about available backend services, the backend services may be more efficiently used and/or managed. As an example, the backend service requests could be routed and/or tailored more efficiently so as to not waste computing resources. Yet further, the present disclosure may provide improved user satisfaction based on better content discovery driven by: 1) optimized SERP and UI tailored to the user's intent; 2) better understanding of recommendation-like requests (e.g., "recommend a business podcast for me"); and 3) improved understanding of complex queries (e.g., "podcasts about the 1^{st} American president").

Accordingly, a first example embodiment may involve a method. The method includes receiving a search query input via a user interface associated with a media content delivery system. The method optionally includes generating, by use of a LM, a text-based intermediate summary based on the search query input and information about one or more backend services associated with the media content delivery system. The text-based intermediate summary is indicative of a user's search intent. The method additionally includes generating, by use of the LM, structured instructions based at least on the optional text-based intermediate summary and the information about the one or more backend services. In such scenarios, the structured instructions are processable by the one or more of the backend services. The method yet further includes executing the structured instructions by way of one or more of the backend services so as to generate search results. The method also includes causing display, via the user interface, of a search engine results page based on the search results.

A second example embodiment may involve a system. The system includes a display, one or more processors, and a memory, containing program instructions that, upon execution by the one or more processors, cause the system to perform operations. The operations include receiving a search query input via a user interface associated with a media content delivery system. The operations also includes optionally generating, by use of an LM, a text-based intermediate summary based on the search query input and information about one or more backend services associated with the media content delivery system. The text-based intermediate summary is indicative of a user's search intent. The operations additionally include generating, by use of the LM, structured instructions based at least on the optional text-based intermediate summary and the information about the one or more backend services. The structured instructions are processable by the one or more of the backend services. The operations yet further include executing the structured instructions by way of one or more of the backend services so as to generate search results. The operations also include causing display, via the user interface, of a search engine results page based on the search results.

In a third example embodiment, a non-transitory computer-readable medium is provided. The non-transitory computer-readable medium has stored program instructions that, upon execution by a computing system, cause the computing system to perform operations. The operations include receiving a search query input via a user interface associated with a media content delivery system. The operations also include optionally generating, by use of an LM, a text-based intermediate summary based on the search query input and information about one or more backend services associated with the media content delivery system. The text-based intermediate summary is indicative of a user's search intent. The operations additionally include generating, by use of the LM, structured instructions based at least on the optional text-based intermediate summary and the information about the one or more backend services. The structured instructions are processable by the one or more of the backend services. The operations yet further include executing the structured instructions by way of one or more of the backend services so as to generate search results and causing display, via the user interface, of a search engine results page based on the search results.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

### BRIEF DESCRIPTION OF THE DRAWINGS

Figure 1 is a block diagram illustrating a media content delivery system, in accordance with example embodiments.
Figure 2 is a block diagram illustrating an electronic device, in accordance with example embodiments.
Figure 3 is a block diagram illustrating a media content server, in accordance with example embodiments.
Figure 4 is a flow chart illustrating operations, in accordance with example embodiments.
Figure 5 is a block diagram illustrating a displayed search engine results page, in accordance with example embodiments.
Figure 6 is a flow chart illustrating a method, in accordance with example embodiments.
Figure 7 is a set of structured instructions, in accordance with example embodiments.
Figure 8A is a displayable section entitled "Yoga Music Playlists", in accordance with example embodiments.
Figure 8B is a displayable section entitled "Yoga Instructional Episodes", in accordance with example embodiments.
Figure 8C is a displayable section entitled "People also search for", in accordance with example embodiments.
Figure 9 is a block diagram illustrating operations, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations. For example, the separation of features into "client" and "server" components may occur in a number of ways.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

Unless clearly indicated otherwise herein, the term "or" is to be interpreted as the inclusive disjunction. For example, the phrase "A, B, or C" is true if any one or more of the arguments A, B, C are true, and is only false if all of A, B, and C are false.

### I. Example Media Content Delivery System

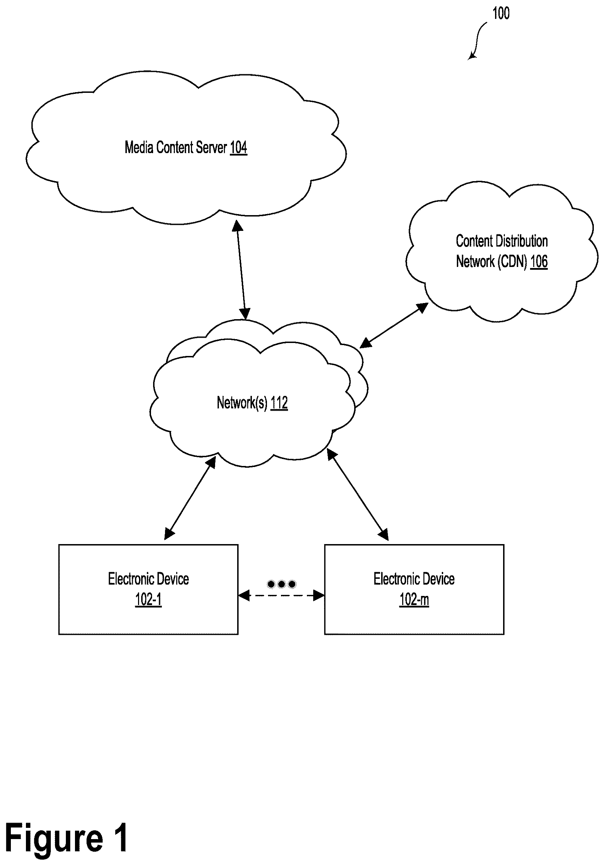

Figure 1 is a block diagram illustrating a media content delivery system 100, in accordance with some embodiments. The media content delivery system 100 includes one or more electronic devices 102 (e.g., electronic device 102-1 to electronic device 102-m, where m is an integer greater than one), one or more media content servers 104, and/or one or more content distribution networks (CDNs) 106. The one or more media content servers 104 are associated with (e.g., at least partially compose) a media-providing service. The one or more CDNs 106 store and/or provide one or more content items (e.g., to electronic devices 102). In some embodiments, the CDNs 106 are included in the media content servers 104. One or more networks 112 communicatively couple the components of the media content delivery system 100. In some embodiments, the one or more networks 112 include public communication networks, private communication networks, or a combination of both public and private communication networks. For example, the one or more networks 112 can be any network (or combination of networks) such as the Internet, other wide area networks (WAN), local area networks (LAN), virtual private networks (VPN), metropolitan area networks (MAN), peer-to-peer networks, and/or ad-hoc connections.

In some embodiments, an electronic device 102 is associated with one or more users. In some embodiments, an electronic device 102 is a personal computer, mobile electronic device, wearable computing device, laptop computer, tablet computer, mobile phone, feature phone, smart phone, infotainment system, digital media player, speaker, television (TV), and/or any other electronic device capable of presenting media content (e.g., controlling playback of media items, such as music tracks, podcasts, videos, etc.). Electronic devices 102 may connect to each other wirelessly and/or through a wired connection (e.g., directly through an interface, such as an HDMI interface). In some embodiments, electronic devices 102-1 and 102-m are the same type of device (e.g., electronic device 102-1 and electronic device 102-m are both speakers). Alternatively, electronic device 102-1 and electronic device 102-m include two or more different types of devices.

In some embodiments, electronic devices 102-1 and 102-m send and receive media-control information through network(s) 112. For example, electronic devices 102-1 and 102-m send media control requests (e.g., requests to play music, podcasts, movies, videos, or other media items, or playlists thereof) to media content server 104 through network(s) 112. Additionally, electronic devices 102-1 and 102-m, in some embodiments, also send indications of media content items (and possibly the media content items) to media content server 104 through network(s) 112. In some embodiments, the media content items are uploaded to electronic devices 102-1 and 102-m before the electronic devices forward the media content items to media content server 104.

In some embodiments, electronic device 102-1 communicates directly with electronic device 102-m (e.g., as illustrated by the dotted-line arrow), or any other electronic device 102. As illustrated in Figure 1, electronic device 102-1 is able to communicate directly (e.g., through a wired connection and/or through a short-range wireless signal, such as those associated with personal-area-network (e.g., BLUETOOTH / BLE) communication technologies, radiofrequency-based near-field communication technologies, infrared communication technologies, etc.) with electronic device 102-m. In some embodiments, electronic device 102-1 communicates with electronic device 102-m through network(s) 112. In some embodiments, electronic device 102-1 uses the direct connection with electronic device 102-m to stream content (e.g., data for media items) for playback on the electronic device 102-m.

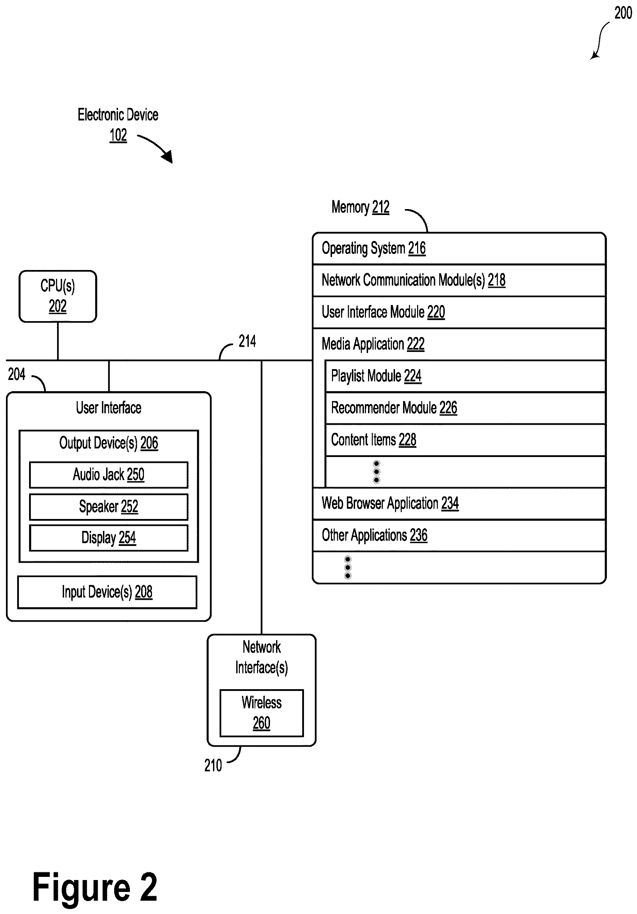

In some embodiments, electronic device 102-1 and/or electronic device 102-m include a media application 222 (Figure 2) that allows a respective user of the respective electronic device to upload (e.g., to media content server 104), browse, request (e.g., for playback at the electronic device 102), and/or present media content (e.g., control playback of music tracks, playlists, videos, etc.). In some embodiments, one or more media content items are stored locally by an electronic device 102 (e.g., in memory 212 of the electronic device 102, Figure 2). In some embodiments, one or more media content items are received by an electronic device 102 in a data stream (e.g., from the CDN 106 and/or from the media content server 104). The electronic device(s) 102 are capable of receiving media content (e.g., from the CDN 106) and presenting the received media content. For example, electronic device 102-1 may be a component of a network-connected audio/video system (e.g., a home entertainment system, a radio/alarm clock with a digital display, or an infotainment system of a vehicle). In some embodiments, the CDN 106 sends media content to the electronic device(s) 102.

In some embodiments, the CDN 106 stores and provides media content (e.g., media content requested by the media application 222 of electronic device 102) to electronic device 102 via the network(s) 112. Content (also referred to herein as "media items," "media content items," and "content items") is received, stored, and/or served by the CDN 106. In some embodiments, content includes audio (e.g., music, spoken word, podcasts, audiobooks, etc.), video (e.g., short-form videos, music videos, television shows, movies, clips, previews, etc.), text (e.g., articles, blog posts, emails, etc.), image data (e.g., image files, photographs, drawings, renderings, etc.), games (e.g., 2- or 3-dimensional graphics-based computer games, etc.), or any combination of content types (e.g., web pages that include any combination of the foregoing types of content or other content not explicitly listed). In some embodiments, content includes one or more audio media items (also referred to herein as "audio items," "tracks," and/or "audio tracks").

In some embodiments, media content server 104 receives media requests (e.g., commands) from electronic devices 102. In some embodiments, media content server 104 includes a voice application programming interface (API), a connect API, and/or a key service. In some embodiments, media content server 104 validates (e.g., using key service) electronic devices 102 by exchanging one or more keys (e.g., tokens) with electronic device(s) 102.

In some embodiments, media content server 104 and/or CDN 106 stores one or more playlists (e.g., information indicating a set of media content items). For example, a playlist is a set of media content items defined by a user and/or defined by an editor associated with a media-providing service. The description of the media content server 104 as a "server" is intended as a functional description of the devices, systems, processor cores, and/or other components that provide the functionality attributed to the media content server 104. It will be understood that the media content server 104 may be a single server computer, or may be multiple server computers. Moreover, the media content server 104 may be coupled to CDN 106 and/or other servers and/or server systems, or other devices, such as other client devices, databases, content delivery networks (e.g., peer-to-peer networks), network caches, and the like. In some embodiments, the media content server 104 is implemented by multiple computing devices working together to perform the actions of a server system (e.g., cloud computing).

Figure 2 is a block diagram 200 illustrating an electronic device 102 (e.g., electronic device 102-1 and/or electronic device 102-m, Figure 1) in accordance with some embodiments. The electronic device 102 includes one or more central processing units (CPU(s) 202, i.e., processors or cores), one or more network (or other communications) interfaces 210, memory 212, and one or more communication buses 214 for interconnecting these components. The communication buses 214 optionally include circuitry (sometimes called a chipset) that interconnects and controls communications between system components.

In some embodiments, the electronic device 102 includes a user interface 204, including output device(s) 206 and/or input device(s) 208. In some embodiments, the input devices 208 include a keyboard, mouse, or track pad. Alternatively, or in addition, in some embodiments, the user interface 204 includes a display device that includes a touch-sensitive surface, in which case the display device is a touch-sensitive display. In electronic devices that have a touch-sensitive display, a physical keyboard is optional (e.g., a soft keyboard may be displayed when keyboard entry is needed). In some embodiments, the output devices (e.g., output device(s) 206) include a speaker 252 (e.g., speakerphone device) and/or an audio jack 250 (or other physical output connection port) for connecting to speakers, earphones, headphones, or other external listening devices. The electronic device 102 could include a display 254. The display 254 could be, for example, configured to present visual information and interact with user inputs. The display 254 could include a multi-layered structure designed for integration into electronic devices, comprising a primary visual output layer. In some examples, the visual output layer may be constructed from an active matrix OLED (AMOLED) panel, which offers high-resolution color output and wide viewing angles. Beneath the visual output layer, a touch-sensitive layer could be provided enabling precise detection of user input through direct contact or proximity sensing. The display 254 further incorporates a cover layer made of chemically strengthened glass or flexible polymer, providing durability and protection against impact and scratches.

Furthermore, some electronic devices 102 use a microphone and voice recognition device to supplement or replace the keyboard. Optionally, the electronic device 102 includes an audio input device (e.g., a microphone) to capture audio (e.g., speech from a user).

In some embodiments, the one or more network interfaces 210 include wireless and/or wired interfaces for receiving data from and/or transmitting data to other electronic devices 102, a media content server 104, a CDN 106, and/or other devices or systems. In some embodiments, data communications are conducted using any of a variety of custom or standard wireless protocols (e.g., NFC, RFID, IEEE 802.15.4, Wi-Fi, ZigBee, 6LoWPAN, Thread, Z-Wave, Bluetooth, ISA100.11a, WirelessHART, MiWi, etc.). Furthermore, in some embodiments, data communications are conducted using any of a variety of custom or standard wired protocols (e.g., USB, Firewire, Ethernet, etc.). For example, the one or more network interfaces 210 include a wireless interface 260 for enabling wireless data communications with other electronic devices 102, media presentations systems, and/or or other wireless (e.g., Bluetooth-compatible) devices (e.g., for streaming audio data to the media presentations system of an automobile). Furthermore, in some embodiments, the wireless interface 260 (or a different communications interface of the one or more network interfaces 210) enables data communications with other WLAN-compatible devices (e.g., a media presentations system) and/or the media content server 104 (via the one or more network(s) 112, Figure 1).

In some embodiments, electronic device 102 includes one or more sensors including, but not limited to, accelerometers, gyroscopes, compasses, magnetometer, light sensors, near field communication transceivers, barometers, humidity sensors, temperature sensors, proximity sensors, range finders, and/or other sensors/devices for sensing and measuring various environmental conditions.

Memory 212 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. Memory 212 may optionally include one or more storage devices remotely located from the CPU(s) 202. Memory 212, or alternately, the non-volatile memory solid-state storage devices within memory 212, includes a non-transitory computer-readable storage medium. In some embodiments, memory 212 or the non-transitory computer-readable storage medium of memory 212 stores the following programs, modules, and data structures, or a subset or superset thereof: an operating system 216, network communication module(s) 218, a user interface module 220, a media application 222, a web browser application 234, and other applications 236.

The operating system 216 may include procedures for handling various basic system services and for performing hardware-dependent tasks. Network communication module(s) 218 may connect the electronic device 102 to other computing devices (e.g., media presentation system(s), media content server 104, and/or other client devices) via the one or more network interface(s) 210 (wired or wireless) connected to one or more network(s) 112. The user interface module 220 may receive commands and/or inputs from a user via the user interface 204 (e.g., from the input devices 208) and provides outputs for playback and/or display on the user interface 204 (e.g., the output devices 206). Media application 222 (e.g., an application for accessing a media-providing service of a media content provider associated with media content server 104) may provide uploading, browsing, receiving, processing, presenting, and/or requesting playback of media (e.g., media items).

In some embodiments, media application 222 includes a media player, a streaming media application, and/or any other appropriate application or component of an application. In some embodiments, media application 222 is used to monitor, store, and/or transmit (e.g., to media content server 104) data associated with user behavior. In some embodiments, media application 222 also includes the following modules (or sets of instructions), or a subset or superset thereof: a playlist module 224, a recommender module 226, and a content items module 228.

The playlist module 224 may store sets of media items for playback in a predefined order. In some embodiments, the playlist module 224 is configured to generate playlists. In some embodiments, the playlist module 224 includes a diffusion model component, a large language model component, and/or a nearest neighbor search component. The recommender module 226 may identify and/or display recommended media items (e.g., to include in a playlist). In some embodiments, the recommender module 226 includes a diffusion model component, a large language model component, and/or a nearest neighbor search component. The content items module 228 may store media items, including audio items such as podcasts and songs, for playback and/or for forwarding requests for media content items to the media content server. In some embodiments, the content item module 228 includes a set of vector representations for the media items.

The web browser application 234 may access, view, and interact with web sites. In doing so, the web browser application 234 may using web-based communication protocols, web-based applications, and/or web-based content formats.

The other applications 236 may include applications for word processing, calendaring, mapping, weather, time keeping, virtual digital assistant, presenting, drawing, instant messaging, e-mail, telephony, video conferencing, photo management, video management, a digital music player, a digital video player, 2D gaming, 3D (e.g., virtual reality) gaming, electronic book reader, and/or workout support.

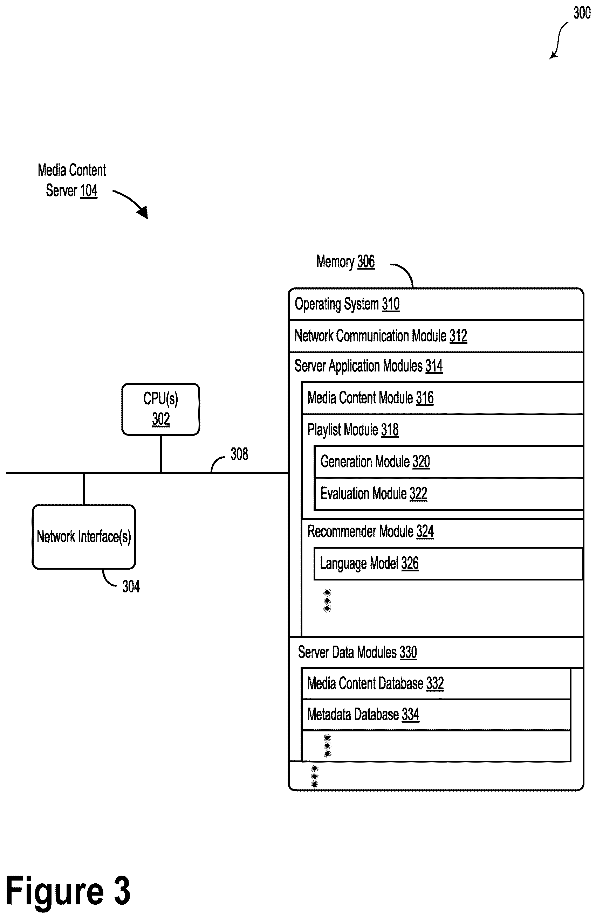

Figure 3 is a block diagram illustrating a media content server 104 in accordance with some embodiments. The media content server 104 typically includes one or more CPUs 302, one or more network interfaces 304, memory 306, and one or more communication buses 308 for interconnecting these components.

Memory 306 includes high-speed random-access memory, such as DRAM, SRAM, DDR RAM, or other random access solid-state memory devices; and may include non-volatile memory, such as one or more magnetic disk storage devices, optical disk storage devices, flash memory devices, or other non-volatile solid-state storage devices. Memory 306 optionally includes one or more storage devices remotely located from one or more CPUs 302. Memory 306, or, alternatively, the non-volatile solid-state memory device(s) within memory 306, includes a non-transitory computer-readable storage medium. In some embodiments, memory 306, or the non-transitory computer-readable storage medium of memory 306, stores the following programs, modules and data structures, or a subset or superset thereof: an operating system 310, a network communication module 312, one or more server application modules 314, and one or more server data module(s) 330.

The operating system 310 may include procedures for handling various basic system services and for performing hardware-dependent tasks.

The network communication module 312 may be used for connecting the media content server 104 to other computing devices via one or more network interfaces 304 (wired or wireless) connected to one or more networks 112.

The one or more server application modules 314 may perform various functions with respect to providing and managing a content service, the server application modules 314 including, but not limited to, one or more of: a media content module 316, a playlist module 318, and a recommender module 324.

The media content module 316 may store one or more media content items and/or send (e.g., stream), to the electronic devices, one or more requested media content item(s).

The playlist module 318 may be for storing and/or providing (e.g., streaming) sets of media content items (e.g., to the electronic devices 102). In some embodiments, the playlist module 318 includes one or more of: a generation module 320 for generating playlists and media sets and an evaluation module 322 for evaluating the playlists and media sets, e.g., before and after publication. In some embodiments, the playlist module 318 includes a diffusion model component, a large language model component, and/or a nearest neighbor search component.

The recommender module 324 may determine and/or provide media item recommendations (e.g., for a playlist). In some embodiments, the recommender module 324 includes a diffusion model component, a language model 326 (e.g., a large language model, LLM) component, and/or a nearest neighbor search component. In various examples, language model 326 could include a local language model and/or a remote language model.

Some language models 326 could be hosted locally, such as on a user's own computing device or a local server. Such models may offer improved privacy and security since user data does not need to be sent externally. These models utilize local hardware resources and are directly accessible within the local network.

Remote language models can be hosted on cloud servers managed by an external provider, making them accessible via the internet. This setup benefits from the cloud's scalability and reliability, with performance not limited by local hardware. These models can be maintained by the provider (e.g., the media content server 104).

The one or more server data module(s) 330 may manage the storage of and/or access to media items and/or metadata relating to the media items. In some embodiments, the one or more server data module(s) 330 include: a media content database 332 for storing media items and/or vector representations (or other embeddings) for the media items; and a metadata database 334 for storing metadata relating to the media items, such as a genre associated with the respective media items.

In some embodiments, the media content server 104 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

Each of the above identified modules stored in memory 212 and 306 corresponds to a set of instructions for performing a function described herein. The above identified modules or programs (i.e., sets of instructions) need not be implemented as separate software programs, procedures, or modules, and thus various subsets of these modules may be combined or otherwise re-arranged in various embodiments. In some embodiments, memory 212 and 306 optionally store a subset or superset of the respective modules and data structures identified above. Furthermore, memory 212 and 306 optionally store additional modules and data structures not described above.

Although Figure 3 illustrates the media content server 104 in accordance with some embodiments, Figure 3 is intended more as a functional description of the various features that may be present in one or more media content servers than as a structural schematic of the embodiments described herein. In practice, and as recognized by those of ordinary skill in the art, items shown separately could be combined and some items could be separated. For example, some items shown separately in Figure 3 could be implemented on single servers and single items could be implemented by one or more servers. In some embodiments, media content database 332 and/or metadata database 334 are stored on devices (e.g., CDN 106) that are accessed by media content server 104. The actual number of servers used to implement the media content server 104, and how features are allocated among them, will vary from one implementation to another and, optionally, depends in part on the amount of data traffic that the server system manages during peak usage periods as well as during average usage periods.

### II. Digital Audio Content and Streaming

Digital audio content, as discussed herein, encompasses a broad range of audio data that has been converted into a digital format, enabling it to be stored, processed, transmitted, and received by electronic devices. This can include spoken word recordings, such as news broadcasts, podcasts, audiobooks, and lectures, which offer listeners a convenient way to consume information and entertainment through auditory means. Additionally, digital audio content can combine spoken word with music or other sounds, creating rich, multi-layered audio experiences commonly found in radio shows, multimedia presentations, and enhanced podcasts. Furthermore, digital audio content often constitutes the audio portion of digital video content, such as the soundtrack of movies, television shows, online videos, and live streams. This integration allows for synchronized audio-visual experiences that enhance the storytelling and engagement of visual media. Digital audio content is typically compressed using various encoding techniques (e.g., MP3, AAC, or Opus) to reduce file size while maintaining quality, and it can be distributed across a multitude of platforms, including streaming services, downloadable files, and broadcasting networks. Digital audio content may also be obtained from audio/video encodings, such as H.264/MPEG-4 or 3GP.

For instance, digital audio content streaming involves transmitting audio data from a media content server 104 to electronic devices 102 over a network 112. At the media content server 104, the process may involve content preparation, where the audio is encoded using compression algorithms (if it is not already compressed). The encoded audio is then segmented into smaller pieces, making it easier to stream continuously. These audio content pieces, along with associated metadata, are stored on the media content server 104. To facilitate delivery, the server may utilize the CDN 106, which caches the audio content pieces on geographically distributed servers, reducing latency and improving reliability. The media content server 104 may employ streaming protocols such as HTTP Live Streaming (HLS), Dynamic Adaptive Streaming over HTTP (DASH), or the Real-Time Messaging Protocol (RTMP) to transmit the audio segments. These protocols manage the data transmission and adapt to varying network conditions. Additionally, the media content server 104 handles user sessions, managing requests for specific audio streams and providing secure access through authentication and authorization mechanisms.

On the receiving end, electronic devices 102 may initiate a connection to the media content server 104 by requesting a specific audio stream. After receiving the initial audio segments, the electronic device 102 begins buffering, pre-loading a portion of the audio into memory to provide smooth playback even in the case of minor network interruptions. The buffered pieces are then decoded from their compressed format back into an audio signal by media player software of the electronic device 102. Adaptive streaming protocols, such as those discussed above, allow the electronic device 102 to monitor network conditions and request different quality levels of digital audio content based on current bandwidth availability, thus providing consistent playback without interruptions in most cases. The electronic device 102 also handles network errors and interruptions by attempting to reconnect to the media content server 104, re-buffering when necessary, and dynamically adjusting the stream quality to maintain a continuous audio experience. The decoded audio may be played through the electronic device 102 (e.g., via speakers or headphones), with the media player software managing playback controls like play, pause, skip, and volume adjustment.

### III. Example Natural Language Models

As discussed above, the embodiments herein may employ natural language models. Language models (LMs) are one example of such a natural language model. These LMs may operate as networked servers that take in information from a client device as a prompt and provide a semantically appropriate response as output to the client device.

In general, an LM is an advanced computational model, primarily functioning within the domain of natural language processing and machine learning. An LM can be configured to understand, interpret, generate, and respond to human language in a manner that is both contextually relevant and syntactically coherent. The underlying structure of an LM is typically based on a neural network architecture, more specifically, a variant of the transformer model. Transformers are notable for their ability to process sequential data, such as text, with high efficiency.

The operation of an LM involves layers of interconnected processing units, known as neurons, which collectively form a deep neural network. This network can be trained on vast datasets comprising text from diverse sources, thereby enabling the LM to learn a wide array of language patterns, structures, and colloquial nuances for prose, poetry, and program code. The training process involves adjusting the weights of the connections between neurons using algorithms such as backpropagation, in conjunction with optimization techniques like stochastic gradient descent, to minimize the difference between the LM's output and expected output.

An aspect of an LM's functionality is its use of attention mechanisms, particularly self-attention, within the transformer architecture. These mechanisms allow the model to weigh the importance of different parts of the input text differently, enabling it to focus on relevant aspects of the data when generating responses or analyzing language. The self-attention mechanism facilitates the model's ability to generate contextually relevant and coherent text by understanding the relationships and dependencies between words or tokens in a sentence (or longer parts of texts), regardless of their position.

Upon receiving an input, such as a text query or a prompt, the LM may process this input through its multiple layers, generating a probabilistic model of the language therein. It predicts the likelihood of each word or token that might follow the given input, based on the patterns it has learned during its training. The model then generates an output, which could be a continuation of the input text, an answer to a query, or other relevant textual content, by selecting words or tokens that have the highest probability of being contextually appropriate.

Furthermore, an LM can be fine-tuned after its initial training for specific applications or tasks. This fine-tuning process involves additional training (e.g., with reinforcement from humans), usually on a smaller, task-specific dataset, which allows the model to adapt its responses to suit particular use cases more accurately. This adaptability makes LMs highly versatile and applicable in various domains, including but not limited to, chatbot development, content creation, language translation, and sentiment analysis.

Some LMs are multimodal in that they can receive prompts in formats other than text and can produce outputs in formats other than text. Thus, while LMs are predominantly designed for understanding and generating textual data, multimodal LMs extend this functionality to include multiple data modalities, such as visual and auditory inputs, in addition to text.

A multimodal LM can employ an advanced neural network architecture, often a variant of the transformer model that is specifically adapted to process and fuse data from different sources. This architecture integrates specialized mechanisms, such as convolutional neural networks for visual data and recurrent neural networks for audio processing, allowing the model to effectively process each modality before synthesizing a unified output.

The training of a multimodal LM involves multimodal datasets, enabling the model to learn not only language patterns but also the correlations and interactions between different types of data. This cross-modal training results in multimodal LMs being adept at tasks that require an understanding of complex relationships across multiple data forms, a capability that text-only LMs do not possess. This makes multimodal LMs particularly suited for advanced applications that necessitate a holistic understanding of multimodal information, such as chatbots that can interpret and produce images and/or audio.

### IV. Example Search Recommender Systems

An example search recommender system applies a generative approach to Query Understanding and Search Page Optimization. The system leverages LMs and existing backend services to optimize the SERP based on the user's intent, moving Search from a content ranking system to an agent that orchestrates and generates rich and structured search results pages based on users entertainment needs.

An example search recommender system is now described in reference to Figures 1, 2, and 3. The system may include a display (e.g., display 254), one or more processors (e.g., CPU(s) 202 and/or CPU(s) 302), and a memory (e.g., memory 212 and/or memory 306). The memory contains program instructions that, upon execution by the one or more processors, cause the system to perform certain operations.

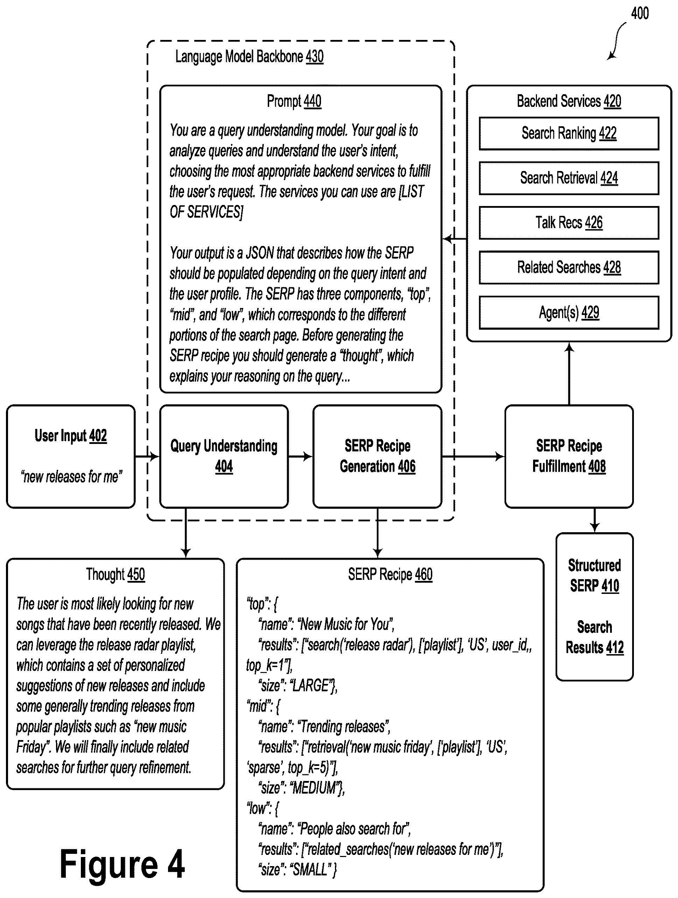

Figure 4 is a flow chart 400 illustrating the operations, in accordance with example embodiments. The operations include receiving a search query input (e.g., user input 402) via a user interface (e.g., user interface 204) associated with a media content delivery system 100. In some examples, the search query input could be provided from a client device (e.g., electronic device 102-1, 102-m).

### A. Query Understanding

The operations include optionally generating, by use of a Language Model (LM) (e.g., language model 326 and/or language model backbone 430), a text-based intermediate summary (e.g., thought 450) based on the search query input and information about one or more backend services (e.g., backend services 420) associated with the media content delivery system. Generating the text-based intermediate summary can also be termed query understanding 404. As described herein, the optional text-based intermediate summary may be indicative of a user's search intent.

In various examples, the backend services 420 could include search ranking 422, search retrieval 424, talk recommendations 426, and related searches 428. Additionally or alternatively, the backend services 420 could include one or more agents 429, such as a semi-autonomous or fully-autonomous agent (e.g., an artificial intelligence (AI)-based agent, an AI-powered assistant, a machine learning agent, or an AI-based bot, among other possibilities). It will be understood that the backend services 420 could include other types of automated systems.

In example embodiments, receiving the search query input includes receiving text. In such scenarios, the text may include unstructured natural language text.

In some examples, generating the optional intermediate summary includes using at least one of: chain-of-thought-prompting or few-shot prompting.

In some examples, the optional intermediate summary specifies at least one of: available backend services, content languages, or playback options. In some example embodiments, the playback options could include streaming, progressive download, adaptive streaming, offline viewing/listening, live streaming, on-demand playback, background play, and variable playback speeds.

Query Understanding is a general term that describes techniques that are meant to analyze and better understand user queries. Within the context of a media content server search, Query Understanding can impact several downstream search tasks such as query formulation, query suggestion, retrieval, ranking, and search page optimization.

Query Understanding can be provided using one or more approaches.

Implicit Query Understanding is based on creating query-dependent features (e.g. embeddings) that are passed on to the current Search services, such as retrieval and ranking. As an example, semantic embeddings may be added to a Rankings Request for Comments (RFC) link.

Implicit Query Understanding can help models retrieve and rank results based on a semantic understanding of the query, and address some of the use-cases mentioned herein, but do not provide interpretable labels such as exploratory intent that can inform the arrangement of the SERP. Some benefits of this approach include that there is no need to define taxonomies and that the user can let the machine learning models learn what to do with the embedding information.

Synthetic Queries with pre-defined intent may include generating synthetic queries conditioned on specific item types (e.g. for audiobooks). In this way, the presently-described system and method can determine the "content type" intent without having to develop a classifier. These synthetic queries with pre-defined intent can be relatively easy to implement and the user interface is more easily customizable than other methods.

Intent Classification and Slot Filling is the most common approach to Query Understanding, typically utilized by voice assistants, and it involves:
- Defining a taxonomy of intents and associated entity types (slots). Example:
   a. - Intent: music_intent
      i. - Slots: decade , genre, artist_name, song_name, year ...
   b. - Intent: podcast_intent
      i. - Slots: host, guest, topic...
   c. - Intent: audiobook_intent
      i. - Slots: author, topic, narrator, year, ...
- Creating training data with labelled instances. Example:
   i. - "hardcore techno music 90s" intent: "music_intent", slots: {"hardcore techno": genre, "90s": decade}
- Training an ML model to recognize intents and extract slots (similar to Named Entity Recognition)
- Passing these explicit labels to other Search systems (e.g. query suggestion, retrieval, ranking) as well as to inform SERP optimization

### B. SERP Recipe Generation

In example systems and methods, the LM may generate a set of commands (e.g., structured instructions) that one or more backend services could carry out. Specifically, the systems and methods generates a structured SERP recipe that prescribes:
1) How the SERP should be organized, e.g., number of sections, section title(s), size(s) of respective section(s), and arrangement of different sections; and/or
2) Which and how different backend services should be called to fill the different sections of the SERP.

In an example embodiment, the prompt provided to the LM may provide examples of one or more SERP recipes for different types of queries following a few-shot learning approach. High accuracy is important in this step, as an error in the generated recipe will result in errors in the following steps (i.e. in the invocation of the backend services). For this reason, so-called "large language models", or LLMs, may be favored over smaller models.

Few-shot prompting is a technique used with advanced language models like GPT-3 or GPT-4, where the model is given a few examples (or "shots") to help it understand and perform a specific task. This method leverages the model's pre-trained knowledge and ability to generalize from limited data to new scenarios. Few-shot prompting is part of a broader category of techniques that also includes zero-shot and one-shot prompting, varying in the number of examples provided.

Returning to Figure 4, the operations include generating 406, by use of the LM, structured instructions (e.g., SERP recipe 460) based at least on the optional text-based intermediate summary and the information about the one or more backend services. The structured instructions are processable by one or more of the backend services.

In various examples, generating the structured instructions could include generating a displayable search engine results page layout. In such scenarios, generating the displayable search engine results page layout includes generating layout parameters defining one or more aspects of the search engine results page. In various embodiments, the layout parameters include at least one of: a number of sections, section titles, section sizes, or section arrangement.

### C. SERP Recipe Fulfillment and Display

The operations include fulfilling 408 the SERP recipe by executing the structured instructions by way of one or more of the backend services so as to generate search results 412.

The operations additionally include causing display, via the user interface (e.g., user interface 204), of a search engine results page (e.g., Structured SERP 410) based on the search results.

In some example embodiments, causing display of the search engine results page could include displaying information indicative of media content arranged in at least one section and having at least one section title based on a respective section size and a respective section arrangement. For example, the displayed information could be selected, formatted, and/or arranged in accordance with the structured instructions (e.g., the SERP recipe).

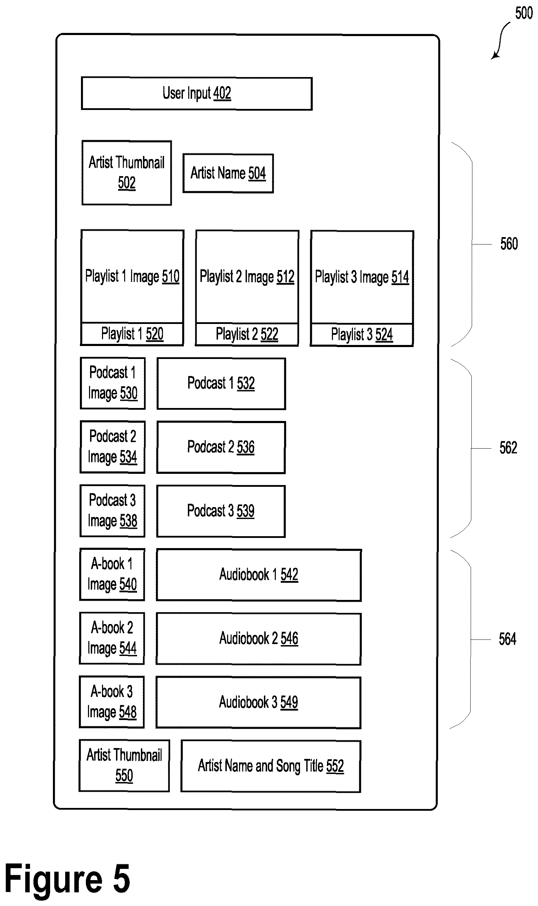

Figure 5 is a block diagram illustrating a displayed search engine results page (SERP) 500, in accordance with example embodiments. The search engine results page 500 may be displayed on a mobile computing device (e.g., electronic device 102), such as a smartphone. Additionally or alternatively, the search engine results page 500 may be displayed on a desktop computer or another type of computing device.

The SERP 500 may be provided in response to a user providing a user input 402 by interacting with a keyboard or touchscreen to enter an unstructured text prompt. The SERP 500 may have various sections, such as a top section 560, a middle section 562, and/or a lower section 564. These various sections may be displayed on respective portions of the display.

In the top section 560, the SERP 500 may include an artist thumbnail 502 and an artist name 504. The SERP 500 may also include a playlist 1 image 510 and corresponding playlist 1 description 520, a playlist 2 image 512 and corresponding playlist 2 description, and a playlist 3 image 514 and corresponding playlist 3 description.

In the middle section 562, the SERP 500 may include podcast 1 image 530 and corresponding podcast 1 description 532, podcast 2 image 534 and corresponding podcast 2 description 536, and podcast 3 image 538 and corresponding podcast 3 description 539.

In the lower section 564, the SERP 500 may include audiobook 1 image 540 and corresponding audiobook 1 description 542, audiobook 2 image 544 and corresponding audiobook 2 description 546, and audiobook 3 image 548 and corresponding audiobook 3 description 549.

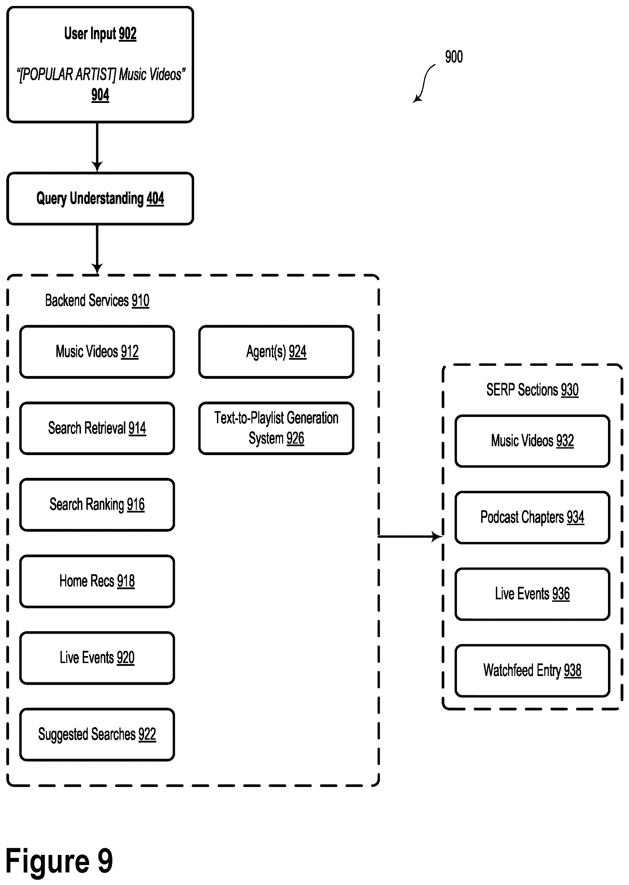

In some embodiments, SERP 500 and/or one or more of Playlist 1, Playlist 2, and/or Playlist 3 could include a playlist generated by a text-to-playlist generation system (e.g., text-to-playlist generation system 926 described in reference to Figure 9). Additionally or alternatively, SERP 500 could include a representation of a playlist generated by the text-to-playlist generation system. In such scenarios, the representation of the playlist could include a way to describe the playlist without actually displaying a full text-based list of the entire playable contents (e.g., song titles, video titles, content titles, etc.) of the generated playlist. As an example, the representation of the playlist could include, without limitation, a playlist preview, a playlist summary, a playlist text or graphical description, a playlist card, playlist metadata, and/or a playlist snapshot. In an example embodiment, SERP 500 may include a graphical representation that may provide a link to and/or an identifier relating to the generated playlist. Other types of text-based, graphical, and/or audio-based representations of the generated playlist are possible and contemplated.

In some embodiments, the SERP 500 may also include a current artist thumbnail 550 and corresponding current artist description 552.

Systems and methods described herein may beneficially provide more relevant and graphically rich SERPs that go beyond a traditional ranked list of catalog entities. Example SERPs may include multiple components that help users discover new content (e.g. recommendations, related searches, videos, podcast clips, related searches, explore feed). Furthermore, optimal SERPs are closely based on the user's intent so as to provide relevant and visually-interesting recommendations.

### D. Example LM Prompts

In various examples, a prompt to the LM could include the following elements:
*<PROMPT PREAMBLE>: describes the overall task and adds general information like current date, etc.*
*<Available services>: provides a brief description of backend services and their specifications*
*<FEW SHOT EXAMPLES>: several examples of how to build the SERP for different queries*

It will be understood that more or fewer elements could be included in the prompt.

### V. LM Training

Training an LM to perform the tasks for which it is relied on herein may not be necessary in all cases. Some LMs may be able to perform these tasks without specifically being trained to do so. However, LM fine-tuning may improve an LM's performance at these tasks.

As an example, a corpus of transcripts, augmentations thereof, user history, trending contest lists, among other information, may be used as training data. The LM may be trained in a manner that teaches (e.g., fine-tunes) it to associate user inputs with predicted user intent and/or thought 450. After being trained with a large enough corpus, the LM may learn to generate thought(s) 450 and/or SERP recipe(s) 460 in accordance with its training data.

### VI. Example Operations

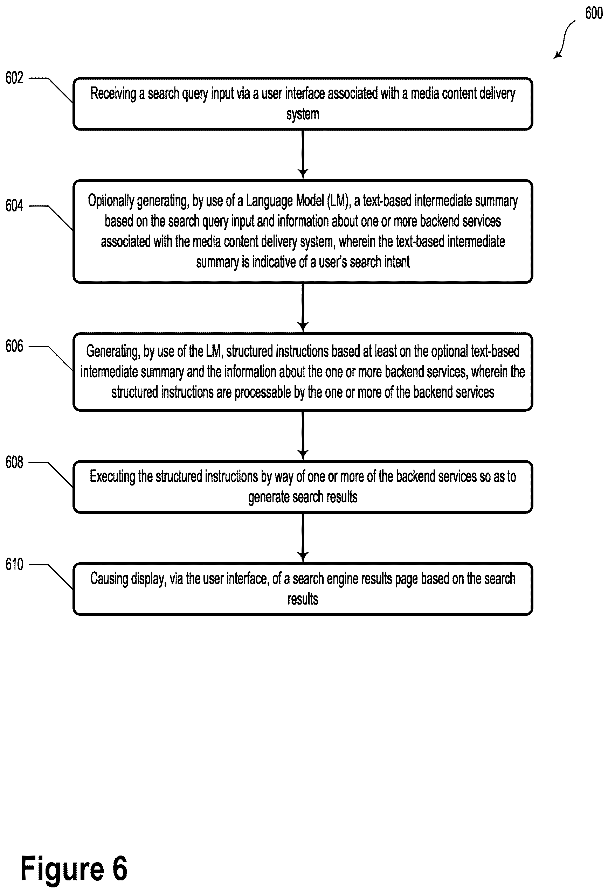

Figure 6 is a flow chart illustrating an example embodiment. The method 600 illustrated by Figure 6 may be carried out by a computing device, such as media content server 104, and/or one or more additional computing devices arranged to prepare digital audio content. Alternatively, the process can be carried out by other types of devices or device subsystems.

The embodiments of Figure 6 may be simplified by the removal of any one or more of the features or blocks shown therein. Further, these embodiments may be combined with features, blocks, aspects, and/or implementations of any of the previous figures or otherwise described herein.

Block 602 includes receiving a search query input (e.g., user input 402) via a user interface (e.g., user interface 204) associated with a media content delivery system (e.g., media content server 104). In some examples, receiving the search query input can include receiving text. In some embodiments, the text may include unstructured natural language text.

Block 604 includes optionally generating (e.g., query understanding 404), by use of a Language Model (LM) (e.g., language model backbone 430), a text-based intermediate summary (e.g., thought 450) based on the search query input and information about one or more backend services (e.g., backend services 420) associated with the media content delivery system. As described herein, the optional text-based intermediate summary is intended to be indicative of a user's search intent.

In some examples, generating the optional intermediate summary is performed using at least one of: chain of-thought-prompting or few-shot prompting.

In various embodiments, the optional intermediate summary specifies at least one of: available backend services, content languages, or playback options.

Block 606 includes generating (e.g., SERP recipe generation 406), by use of the LM, structured instructions (e.g., SERP recipe 460) based at least on the optional text-based intermediate summary and the information about the one or more backend services. The structured instructions are processable by the one or more of the backend services.

In some embodiments, generating the structured instructions could include generating a displayable search engine results page layout. In such scenarios, generating the displayable search engine results page layout could include generating layout parameters defining one or more aspects of the search engine results page. The layout parameters can include at least one of: a number of sections, section titles, section sizes, or section arrangement. In some embodiments, the sections include at least one of: media content types, content libraries, live event calendars, or suggested searches.

Block 608 includes executing the structured instructions by way of one or more of the backend services so as to generate search results (e.g., search results 412).

Block 610 includes causing display, via the user interface, of a search engine results page based on the search results. In some embodiments, the one or more backend services could include a text-to-playlist generation system (e.g., text-to-playlist generation system 926). In such scenarios, generating the structured instructions could include generating structured instructions that cause the text-to-playlist generation system to generate a playlist based on one or more of i) at least a portion of the structured instructions, ii) the search query input, or iii) corresponding user intent. Furthermore, in such examples, causing display of the search engine results page includes causing display of the generated playlist or a representation of the generated playlist.

In various examples, causing display of the search engine results page can include displaying information indicative of media content arranged in at least one section and having at least one section title based on a respective section size and a respective section arrangement.

Method 600 may provide numerous benefits to users. For example, method 600 can be generalized to widely different user intents (e.g. music, podcast, exploration, navigation, etc.). Method 600 can also understand complex requests (e.g. "find a podcast about the first Italian president after the 2^{nd} World War"). Additionally, method 600 can incorporate business logic and product needs to provide a desired look and feel for the search engine results page (e.g. we should provide more content diversity to match a user's exploratory intents). Yet further, method 600 can be utilized alongside and/or augment existing personalization services (e.g. conventional recommendations, keyword search, etc.) provided by the media content server.

Given a query (or a history of queries) such as "yoga for beginners", systems and methods described herein first perform a query understanding step so as to generate a "thought" that verbalizes the user's reasoning for the query. This step is an example of Chain-of-Thought prompting, a technique that improves LM accuracy by verbalizing the LM's reasoning. It also may help explainability and interpretability of the results. This step is handled by the LM backbone (e.g., language model backbone 430), providing examples of "thoughts" in the prompt following a few-shot learning approach.

Chain-of-thought prompting is a technique used in the field of natural language processing, particularly with language models like GPT-3 or GPT-4, to enhance the model's ability to solve complex reasoning tasks. This method involves structuring a prompt to encourage the model to generate intermediate steps or reasoning processes before arriving at a final answer. Essentially, it guides the model to "think aloud" as it approaches a problem.

In the case where a user provides the input "yoga for beginners", the generated "thought" could be, for example: "The user is looking for yoga-related content suitable for beginners. This likely includes a mix of playlists and episodes that provide instructions, tutorials, and possibly calming music for yoga practice. We should provide a mix of music playlists for yoga sessions and episodes or shows that offer instructional content. Additionally, we can add related searches to help the user explore more specific types of yoga content."

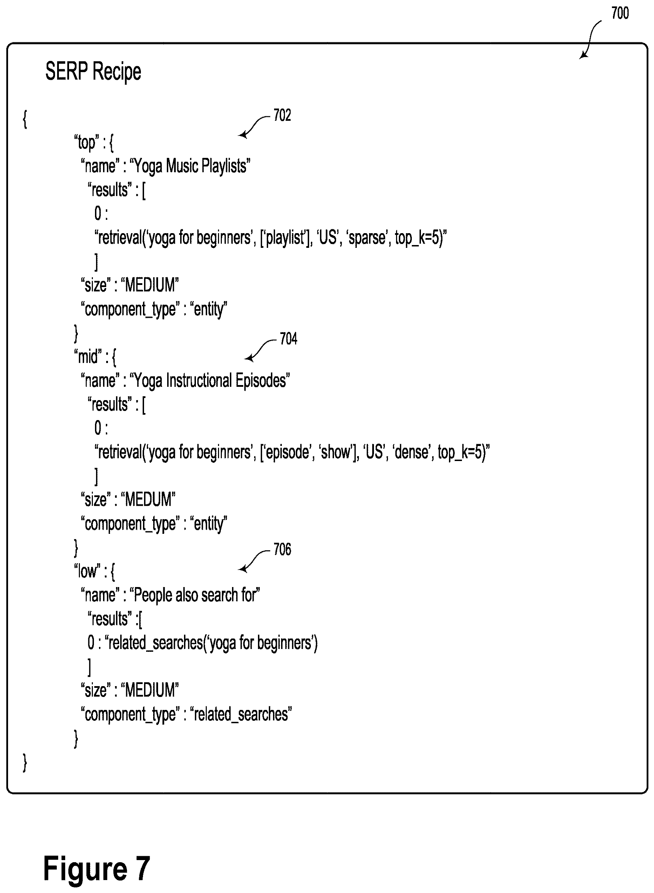

Figure 7 is a set of structured instructions 700, in accordance with example embodiments. The structured instructions 700 may be written in JavaScript Object Notation (JSON), which is a lightweight data-interchange format. Other computing languages are contemplated, including C, C++, C#, Java, JavaScript, Perl, Python, among possibilities.

The structured instructions 700 describe a top section 702, a mid section 704, and a low section 706. The top section 702 is named "Yoga Music Playlists". The top section 702 includes a retrieval request: "retrieval('yoga for beginners', ['playlist'], 'US', 'sparse', top_k=5)". The mid section 704 is named "Yoga Instructional Episodes". The mid section 704 includes a retrieval request: "retrieval('yoga for beginners', ['episode', 'show'], 'US', 'dense', top_k=5)". The low section 706 is named "People also search for". The low section 706 includes a retrieval request: "related_searches('yoga for beginners')".

It will be understood that other retrieval requests are possible and contemplated. The retrieval requests could have different syntax and/or utilize other backend services. After the SERP recipe is generated, the backend executes the services across the different sections and the User Interface builds the SERP based on the fetched results.

In various embodiments, the potential backend services could include, for example, search ranking, search retrieval(sparse or dense), related searches, and talk audio recommendations. The described systems and methods enable generalization to different user intents, and can be seen as a way to scale up on programmatic rules often manually set up by editors for very specific queries. The knowledge encoded and the language understanding abilities of the LM help the system generalize across the exact entity instances and lexical variations. In the current setup, the LM is encouraged via prompt to use search ranking when personalized search results are needed (e.g. when the user's Release Radar playlist is utilized), talk audio recommendations when the intent is very broad (e.g. "podcasts for me"), search retrieval (sparse) when a stricter keyword matching approach is needed (e.g. "[POPULAR ARTIST NAME] [POPULAR SONG TITLE]"), search retrieval (dense) for more complex queries when we need semantic matching (e.g. "[POPULAR ARTIST] interviews"), and related searches for queries that may require refinement. In example embodiments, the LM prompt utilizes few-shot learning and includes output examples. Additionally or alternatively, other techniques to instruct the LM such as fine-tuning and Retrieval Augmented Generation (RAG) are possible and contemplated.

Additionally or alternatively, systems and methods described herein could relate to other types of user queries and corresponding retrieval requests. For example, a user may search for the latest albums and/or songs from a given artist (e.g., "recent songs or albums from [ARTIST]"). In such scenarios, the user intent could be to listen to songs, albums, podcasts, etc. recently (e.g., within the last 6 months, 12 months, 24 months, etc.) released by ARTIST. As an example, the thought may be expressed as: "The user is looking for recent releases from ARTIST. This will likely include providing a mix of playlists, albums, and songs released from ARTIST selected from the last 12 months. Additionally, we can add related searches to help the user explore other content from the ARTIST."

As a further example, a user may search for the "resurgent" or "trending" albums and/or songs. In such scenarios, the user query could be "old rock song featured in [ADVERTISEMENT]" or "play the trendy 80's folk artist featured in the soundtrack of [POPULAR SHOW]". In turn, user intent could be to discover a song, an album, and/or an artist relating to a resurgence or trend in popular media. To address this intent, a retrieval request may include a mix of playlists, albums, and songs that are related to the advertisement, show, trend, and/or resurgent artist.

In another embodiment, a user may search for "upcoming concerts with [ARTIST]." In turn, a user intent could be to discover dates and locations of live or virtual shows by ARTIST. To address this intent, a retrieval request may include relevant dates, times, venues, locations, songs, albums, and/or live recordings for ARTIST. In some examples, the search for concerts could be based on a user location (if pre-authorized by the user).

In an example embodiment, a user may search for "artists similar to [ARTIST]." In such scenarios, user intent could be to discover new artists that are similar in genre, musical style, lyrical content, etc. to a known ARTIST. To address this intent, a retrieval request may provide content from related artists. In some cases, related artists could include artists that are liked by other similarly-situated users. In other examples, related artists could include artists from a similar year range, time frame, and/or genre.

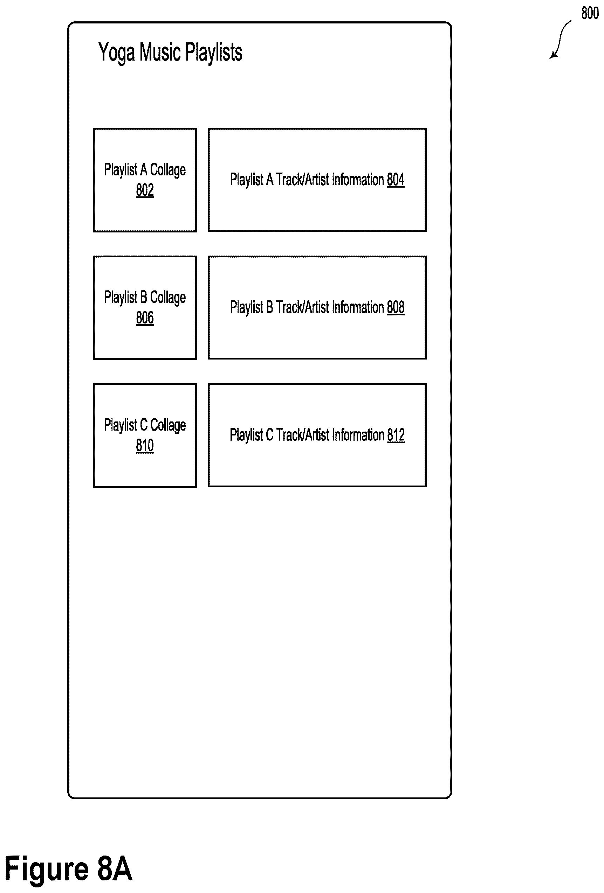

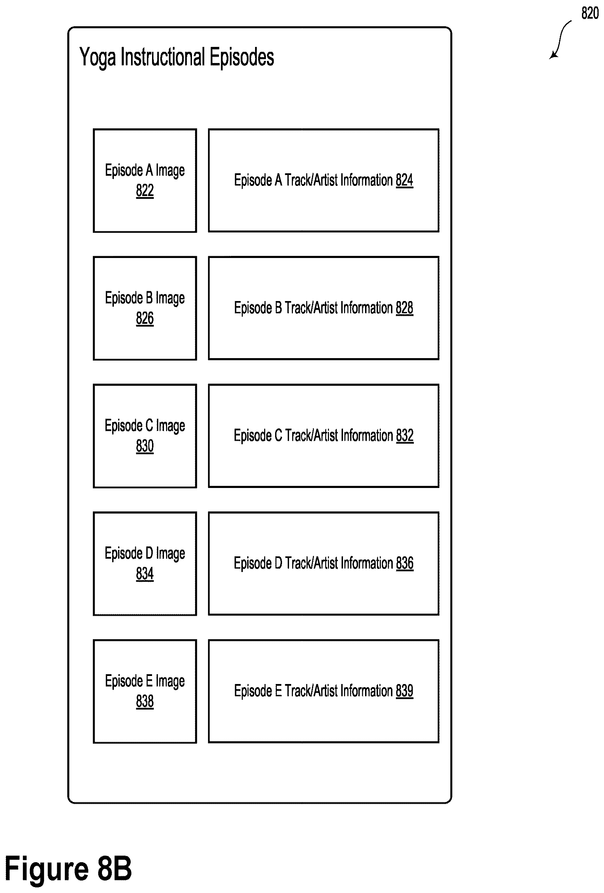

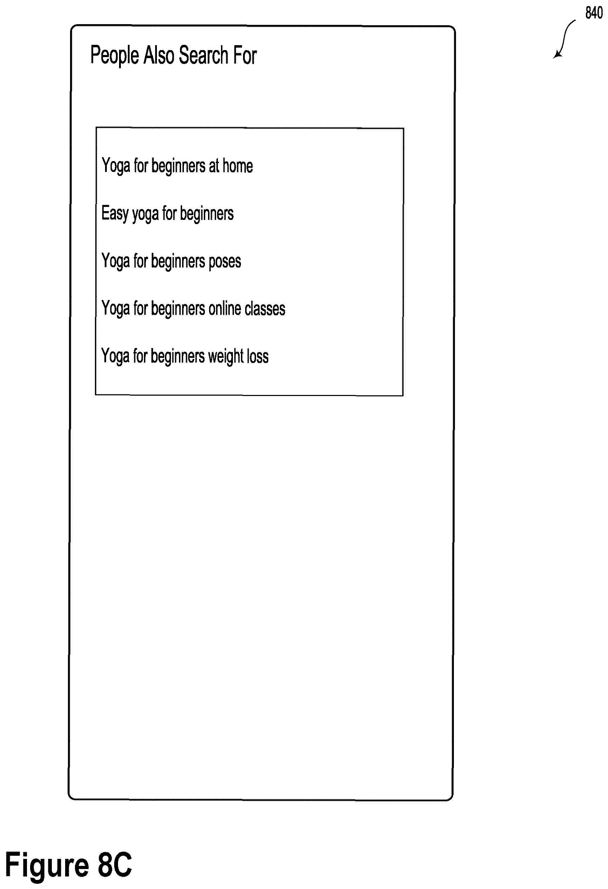

Figures 8A, 8B, and 8C illustrate various sections built using the search results from the utilized backend services.

Figure 8A is a displayable section 800 entitled "Yoga Music Playlists", in accordance with example embodiments. Displayable section 800 includes Playlist A Collage 802, Playlist A Track/Artist Information 804, Playlist B Collage 806, Playlist B Track/Artist Information 808, Playlist C Collage 810, and Playlist C Track/Artist Information 812.

Figure 8B is a displayable section 820 entitled "Yoga Instructional Episodes", in accordance with example embodiments. Displayable section 820 includes Episode A image 822, Episode A Track/Artist Information 824, Episode B image 826, Episode B Track/Artist Information 828, Episode C image 830, Episode C Track/Artist Information 832, Episode D image 834, Episode D Track/Artist Information 836, Episode E image 838, Episode E Track/Artist Information 839.

Figure 8C is a displayable section 840 entitled "People also search for", in accordance with example embodiments. Displayable section 840 includes several other similar searches, including "yoga for beginners at home," "easy yoga for beginners," "yoga for beginners poses," "yoga for beginners online classes," and "yoga for beginners weight loss."

Figure 9 is block diagram 900 illustrating operations, in accordance with example embodiments. Query Understanding (e.g., Query Understanding 404) understands the user query (e.g., user input 902) and routes it to the appropriate backend services 910 so that various SERP sections 930 may be optimized to serve the user intent. In some examples, backend services 910 could include music videos 912, search retrieval 914, search ranking 916, home recommendations 918, live events 920, and suggested searches 922. In various examples, the SERP sections 930 could include music videos 932, podcast chapters 934, live events 936, and/or watchfeed entry 938. In some embodiments, backend services 910 could include one or more agents 924, which could include an AI-based assistant or another type of AI-based autonomous or semi-autonomous bot. In various examples, the one or more agents 924 could include a text-to-playlist generation system 926. In such scenarios, the text-to-playlist generation system 926 could provide a suggested playlist (e.g., a list of playable audio and/or video content) based on a text-based prompt. Within the context of the present disclosure, the text-to-playlist generation system 926 could provide the recommended playlist based on a perceived/determined intent of the user.

In some embodiments, the backbone 430 could be trained and/or configured to determine that a user's intent in a search query is a request to generate a playlist or otherwise receive a proposed playlist in addition to, or instead of, other types of search results.

Additionally or alternatively, the backbone 430 could route the generated SERP recipe (structured instructions), original search query, and/or a text-based description of the user's intent associated with the search query (e.g., thought 450) to the text-to playlist generation system 926. In some cases, the generated SERP recipe could include or otherwise take the form of the original search query and/or the text-based description of the user's intent, and/or may include other information as described herein in association with the SERP recipe. In some cases, the SERP recipe could include an indication that the original search query and/or the text-based description of the user's intent should be used as the text-based prompt (or at least a portion thereof) to be input into the text-to-playlist system for playlist generation.

Accordingly, the text-to-playlist system may generate a playlist based on the search query, user intent, and/or other information associated with the SERP recipe. The text-to-playlist generation system 926 may then provide the generated playlist or a representation of the generated playlist (e.g., a link to the playlist and/or an identifier of the generated playlist) as part of the SERP recipe fulfillment process, such that the playlist or representation thereof can be displayed in the SERP.

In various embodiments, the text-to-playlist generation system 926 and its operations could be similar or identical to the systems and methods described in U.S. Patent Application Number 18/760,758, filed on July 1, 2024, entitled "Systems and Methods for Generating Playlists by Applying Search Prompts to a Model Configured to Generate Structured Queries", and which claims priority to U.S. Patent Application Number 63/554,406, filed February 16, 2024 and having the same title. The contents of both patent applications are hereby incorporated by reference.

In various examples, the Query Understanding model becomes an orchestrator of backend services, moving Search from a content ranking system to an agent that attempts to optimize the SERP depending on the user intent. In this way, systems and methods described herein can be generally applied to new functionalities (e.g., new backend services, new content types, etc.), requires less "rule-based" work, and can directly inform the SERP optimization process.

Another portion of a prompt example follows:
*You are a query understanding model. Your goal is to analyze queries and understand the user's intent, choosing the most appropriate backend services and sequence of commands to fulfill the user's request. Your output is a structured language that describes the different services that the search engine should use as well as how the results should be arranged in the SERP.*

### Services:

- *Service A: given the user query, it retrieves a large set of candidate items that are relevant to the query based on frequently occurring query-item interactions. Useful for abbreviations, acronyms and "collaborative filtering" use-cases.*
- *Service B: given the user query, it retrieves a large set of candidate items based on lexical matching with item metadata. Useful for classic keyword matching use-cases.*
- *Service C: given the user query, it retrieves a large set of candidate items based on matching user and item embeddings. Useful for semantic search use-cases.*
- *Service D: given a broad-intent music query, it retrieves a large set of candidate items based on content understanding. Useful for exploratory music searches.*
- *Service E: given a query, it retrieves recent searches by the user.*
- *Service F: given the user query, it will re-rank the set of candidate items based on additional features such as the user history or the context. It always follows the retrieval step.*
- *Service G: given a query with an exploratory intent, it will provide a set of recommendations based on the user history.*
- *Service H: given a query with an exploratory intent, it will provide a set of query suggestions to further refine the query and help explore the catalog.*
- *Service I: given a query with intent to search for concerts, it will provide a set of relevant concert recommendations.*
- *Service J: given a music query with exploratory intent or a clear intent for browsing video, it will provide a set of music videos that are relevant to the query.*
*Service K: given a query, it will utilize an AI-based agent and*/*or a text-to-playlist generation system to provide a recommended playlist.*

### VII. Example Non-Transitory Computer-Readable Media

Some or all of the operations described herein may be embodied in a non-transitory computer-readable medium. Such a computer-readable medium has stored thereon program instructions that, upon execution by a computing system, cause the computing system to perform various operations.

The program instructions could be configured for receiving a search query input via a user interface associated with a media content delivery system. In some embodiments, receiving the search query input can include receiving text. For example, the text may include unstructured natural language text.

The program instructions could also be configured for optionally generating, by use of a Language Model (LM), a text-based intermediate summary based on the search query input and information about one or more backend services associated with the media content delivery system. The optional text-based intermediate summary is indicative of a user's search intent. In various embodiments, the optional intermediate summary specifies at least one of: available backend services, content languages, or playback options.

The program instructions could additionally be configured for generating, by use of the LM, structured instructions based at least on the optional text-based intermediate summary and the information about the one or more backend services. The structured instructions are configured to be processable by the one or more of the backend services. In various examples, generating the intermediate summary can include using at least one of: chain-of-thought-prompting or few-shot prompting.

In some examples, generating the structured instructions could include generating a displayable search engine results page layout. In such scenarios, generating the displayable search engine results page layout can include generating layout parameters defining one or more aspects of the search engine results page. For example, the layout parameters can include at least one of: a number of sections, section titles, section sizes, or section arrangement.

The program instructions could yet further be configured for executing the structured instructions by way of one or more of the backend services so as to generate search results.

The program instructions could also be configured for causing display, via the user interface, of a search engine results page based on the search results. In some embodiments, causing display of the search engine results page could include displaying information indicative of media content arranged in at least one section and having at least one section title based on a respective section size and a respective section arrangement.

### VIII. Closing

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of non-transitory computer readable medium such as a storage device including RAM, ROM, a disk drive, a solid-state drive, or another tangible storage medium.

Moreover, a step or block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments could include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purpose of illustration and are not intended to be limiting, with the true scope being indicated by the following claims.
Below follows an itemized list of some embodiments of the present invention.
1. A method comprising:
   receiving a search query input via a user interface associated with a media content delivery system;
   generating, by use of a Language Model (LM), structured instructions based at least on the search query input and information about one or more backend services associated with the media content delivery system, wherein the structured instructions are processable by one or more of the backend services;
   executing the structured instructions by way of one or more of the backend services so as to generate search results; and
   causing display, via the user interface, of a search engine results page based on the search results.
2. The method of item 1 further comprising:
   generating, by use of the LM, a text-based intermediate summary based on the search query input and the information about one or more backend services, wherein the text-based intermediate summary is indicative of a search intent, wherein the structured instructions are further based on the intermediate summary.
3. The method of item 2, wherein generating the intermediate summary is performed using at least one of: chain-of-thought-prompting or few-shot prompting, wherein the intermediate summary specifies at least one of: available backend services, content languages, or playback options.
4. The method of item 1, wherein the one or more backend services comprise a text-to-playlist generation system, wherein generating the structured instructions comprises generating structured instructions that cause the text-to-playlist generation system to generate a playlist based on one or more of i) at least a portion of the structured instructions, ii) the search query input, or iii) corresponding user intent, wherein causing display of the search engine results page comprises causing display of the playlist or a representation of the playlist.
5. The method of item 1, wherein receiving the search query input comprises receiving text, wherein the text comprises unstructured natural language text.
6. The method of item 1, wherein generating the structured instructions comprises defining in the structured instructions a layout for the search engine results page.
7. The method of item 6, wherein defining the layout comprises generating layout parameters defining one or more aspects of the search engine results page, wherein the layout parameters comprise at least one of: a number of sections, section titles, section sizes, or section arrangement.
8. The method of item 7, wherein the sections comprise at least one of: media content types, content libraries, live event calendars, or suggested searches.
9. The method of item 7, wherein causing display of the search engine results page comprises displaying information indicative of media content arranged in at least one section and having at least one section title based on a respective section size and a respective section arrangement.
10. A system comprising:
   a display;
   one or more processors; and
   a memory, containing program instructions that, upon execution by the one or more processors, cause the system to perform operations comprising:
      receiving a search query input via a user interface associated with a media content delivery system;
      generating, by use of a Language Model (LM), structured instructions based at least on the search query input and information about one or more backend services associated with the media content delivery system, wherein the structured instructions are processable by the one or more of the backend services;
      executing the structured instructions by way of one or more of the backend services so as to generate search results; and
      causing display, via the user interface, of a search engine results page based on the search results.
11. The system of item 10, wherein the operations further comprise:
   generating, by use of the LM, a text-based intermediate summary based on the search query input and the information about one or more backend services, wherein the text-based intermediate summary is indicative of a user's search intent, wherein the structured instructions are further based on the intermediate summary.
12. The system of item 11, wherein generating the intermediate summary comprises using at least one of: chain of-thought-prompting or few-shot prompting, wherein the intermediate summary specifies at least one of: available backend services, content languages, or playback options.
13. The system of item 10, wherein the one or more backend services comprise a text-to-playlist generation system, wherein generating the structured instructions comprises generating structured instructions that cause the text-to-playlist generation system to generate a playlist based on the search query input and corresponding user intent, wherein causing display of the search engine results page comprises causing display of the playlist.
14. The system of item 10, wherein receiving the search query input comprises receiving text, wherein the text comprises unstructured natural language text.
15. The system of item 10, wherein generating the structured instructions comprises defining in the structured instructions a layout for the search engine results page, wherein defining the layout comprises generating layout parameters defining one or more aspects of the search engine results page, wherein the layout parameters comprise at least one of: a number of sections, section titles, section sizes, or section arrangement.
16. The system of item 15, wherein causing display of the search engine results page comprises displaying information indicative of media content arranged in at least one section and having at least one section title based on a respective section size and a respective section arrangement.
17. A non-transitory computer-readable medium, having stored thereon program instructions that, upon execution by a computing system, cause the computing system to perform operations comprising:
   receiving a search query input via a user interface associated with a media content delivery system;
   generating, by use of a Language Model (LM), structured instructions based at least on information about the one or more backend services associated with the media content delivery system, wherein the structured instructions are processable by the one or more of the backend services;
   executing the structured instructions by way of one or more of the backend services so as to generate search results; and
   causing display, via the user interface, of a search engine results page based on the search results.
18. The non-transitory computer-readable medium of item 17, wherein the operations further comprise:
   generating, by use of the LM, a text-based intermediate summary based on the search query input and the information about one or more backend services, wherein the text-based intermediate summary is indicative of a user's search intent, wherein the structured instructions are further based on the intermediate summary.
19. The non-transitory computer-readable medium of item 17, wherein generating the structured instructions comprises defining in the structured instructions a layout for the search engine results page, wherein defining the layout comprises generating layout parameters defining one or more aspects of the search engine results page, wherein the layout parameters comprise at least one of: a number of sections, section titles, section sizes, or section arrangement.
20. The non-transitory computer-readable medium of item 19, wherein causing display of the search engine results page comprises displaying information indicative of media content arranged in at least one section and having at least one section title based on a respective section size and a respective section arrangement.

## Claims

1. A method comprising:
receiving a search query input via a user interface associated with a media content delivery system;
generating, by use of a Language Model (LM), structured instructions based at least on the search query input and information about one or more backend services associated with the media content delivery system, wherein the structured instructions are processable by one or more of the backend services;
executing the structured instructions by way of one or more of the backend services so as to generate search results; and
causing display, via the user interface, of a search engine results page based on the search results.

2. The method of claim 1 further comprising:
generating, by use of the LM, a text-based intermediate summary based on the search query input and the information about one or more backend services, wherein the text-based intermediate summary is indicative of a search intent, wherein the structured instructions are further based on the intermediate summary.

3. The method of claim 2, wherein generating the intermediate summary is performed using at least one of: chain-of-thought-prompting or few-shot prompting, wherein the intermediate summary specifies at least one of: available backend services, content languages, or playback options.

4. The method of any preceding claim, wherein the one or more backend services comprise a text-to-playlist generation system, wherein generating the structured instructions comprises generating structured instructions that cause the text-to-playlist generation system to generate a playlist based on one or more of i) at least a portion of the structured instructions, or ii) the search query input, wherein causing display of the search engine results page comprises causing display of the playlist or a representation of the playlist.

5. The method of any preceding claim, wherein receiving the search query input comprises receiving text, wherein the text comprises unstructured natural language text.

6. The method of any preceding claim, wherein generating the structured instructions comprises defining in the structured instructions a layout for the search engine results page.

7. The method of claim 6, wherein defining the layout comprises generating layout parameters defining one or more aspects of the search engine results page, wherein the layout parameters comprise at least one of: a number of sections, section titles, section sizes, or section arrangement.

8. The method of claim 7, wherein the sections comprise at least one of: media content types, content libraries, live event calendars, or suggested searches.

9. The method of claim 7 or 8, wherein causing display of the search engine results page comprises displaying information indicative of media content arranged in at least one section and having at least one section title based on a respective section size and a respective section arrangement.

10. A system comprising:
a display;
one or more processors; and
a memory, containing program instructions that, upon execution by the one or more processors, cause the system to perform the method of any preceding claim.

11. A non-transitory computer-readable medium, having stored thereon program instructions that, upon execution by a computing system, cause the computing system to perform the method of any one of claims 1-9.
